# EUROPÄISCHE PATENTSCHRIFT

(11) **EP 2 032 391 B1**
(45) Veröffentlichungstag und Bekanntmachung des Hinweises auf die Patenterteilung: **17.07.2013**
(21) Anmeldenummer: 07728929.6
(22) Anmeldetag: 09.05.2007
(51) Int. Cl.: B60R 1/12, B60R 1/08

(54) **EINRICHTUNG MIT EINER IN EINE RÜCKSPIEGEL-BAUGRUPPE EINGEBAUTEN VIDEOKAMERA IN EINEM FAHRZEUG**
DEVICE HAVING A VIDEO CAMERA WHICH IS INSTALLED IN A REAR-VIEW MIRROR ASSEMBLY IN A VEHICLE
DISPOSITIF COMPRENANT UNE CAMERA VIDEO INTEGREE DANS UN SOUS-ENSEMBLE RETROVISEUR DANS UN VEHICULE

(30) Priorität: 12.06.2006 DE 102006027118
(43) Veröffentlichungstag der Anmeldung: 11.03.2009
(73) Patentinhaber: Robert Bosch GmbH, 70442 Stuttgart (DE)
(72) Erfinder: NIXDORF, Bernhard, 70469 Stuttgart (DE)
(86) Internationale Anmeldenummer: PCT/EP2007/054477
(87) Internationale Veröffentlichungsnummer: WO 2007/144236

(56) Entgegenhaltungen:
- WO-A-02/071487
- WO-A-2004/065176
- WO-A-2005/123453
- US-A- 4 793 690
- US-A1- 2002 014 973
- US-A1- 2003 043 589
- US-B1- 6 302 545

## Beschreibung

### Stand der Technik

Die Erfindung betrifft eine Einrichtung mit einer in Fahrtrichtung ausgerichteten in eine Rückspiegel-Baugruppe eines Fahrzeugs eingebauten Videokamera.

Im Wesentlichen in Fahrtrichtung ausgerichtete Videokameras werden meistens im Zusammenhang mit Bildverarbeitungseinrichtungen für verschiedene Zwecke verwendet, beispielsweise zur Spurverlassenswarnung (LDW), zur Nachtsicht und zum Erkennen und Anzeigen von Hindernissen. Derartige Systeme werden auch Fahrer-Assistenz-Systeme genannt. Eine nach vorn ausgerichtete und in eine Rückspiegel-Baugruppe eingebaute Videokamera ist beispielsweise in DE 100 19 304 A1 dargestellt.

Zur Vermeidung von Blendung durch die Scheinwerfer nachfolgender Fahrzeuge ist ein automatisches Verringern der Reflektivität (Abblenden) des Rückspiegels bekannt. Eine dafür vorgesehene Einrichtung ist beispielsweise durch US 6,742,904 B2 bekannt geworden. Dabei wird mit einem nach vom gerichteten Lichtsensor die Umgebungshelligkeit bestimmt und mit einem rückwärts gerichteten Lichtsensor die Intensität des von hinten auf den Innenspiegel fallenden Lichts überwacht. Es erfolgt eine Verringerung der Reflektivität des Rückspiegels, wenn der nach vom gerichtete Lichtsensor schwaches Licht und der nach hinten gerichtete Lichtsensor stark einfallendes Licht anzeigt.

Die Offenlegungsschrift WO 02/071487 A1 zeigt ein Bildsystem umfassend einen Bildsensor und eine Steuerschaltung für ein Fahrzeug. Der Bildsensor kann eine Fahrzeugumgebung vor dem Fahrzeug sensorisch erfassen. Basierend auf den entsprechenden Sensordaten führt die Steuerschaltung eine Bildverarbeitung durch, um Objekte vor dem Fahrzeug zu erkennen. Abhängig von den erkannten Objekten kann beispielsweise eine Kollisionswarnung ausgegeben werden. Die Steuerschaltung kann beispielsweise zusätzlich noch eine Reflektivität eines Rückspiegels des Fahrzeugs steuern. Dies allerdings nicht in Abhängigkeit von den Signalen des Bildsensors.

Die Offenlegungsschrift US 2003/0043589 A1 zeigt ein Spiegelsystem umfassend ein reflektierendes Element und drei Fotosensoren. Sensorsignale von zwei Fotosensoren der drei Fotosensoren werden verwendet, um eine Reflektivität des reflektierenden Elements zu steuern.

### Offenbarung der Erfindung

Bei der Erfindung ist vorgesehen, dass ferner in der Rückspiegel-Baugruppe ein nach rückwärts gerichteter Lichtsensor vorgesehen ist und dass eine Einrichtung zur Verringerung der Reflektivität des Rückspiegels von den Signalen der Videokamera und des Lichtsensors steuerbar ist. Vorzugsweise ist dabei vorgesehen, dass die Videokamera mit einer Bildverarbeitungseinrichtung verbunden ist.

Die erfindungsgemäße Einrichtung hat den Vorteil einer Kostenreduktion durch die gemeinsame Verwendung der Videokamera für das jeweilige Videosystem (Fahrer-Assistenz-System) und den Rückspiegel. Ferner hat die erfindungsgemäße Einrichtung den Vorteil, dass im Vergleich zu zwei Systemen, nämlich dem automatisch abblendbaren Rückspiegel und einem Fahrer-Assistenz-System, die Baugröße reduziert ist.

Dieser Vorteil wird bei einer Weiterbildung der Erfindung insbesondere dadurch erzielt, dass die Bildverarbeitungseinrichtung ebenfalls in der Rückspiegel-Baugruppe angeordnet ist.

Eine weitere Ersparnis ergibt sich dadurch, dass die Videokamera, der Lichtsensor, die Bildverarbeitungseinrichtung und die Steuereinrichtung auf einer Leiterplatte angeordnet sind.

Eine vorteilhafte Ausgestaltung der erfindungsgemäßen Einrichtung besteht darin, dass ein Mikrocontroller die Ausgangssignale der Videokamera und des Lichtsensors auswertet und Steuersignale für die Steuerung der Reflektivität des Rückspiegels erzeugt.

Bei dieser Ausgestaltung sind im Gegensatz zu dem nach vom gerichteten Lichtsensor detailliertere Auswertemöglichkeiten für die Abblendung des Innenspiegels durch zweidimensional aufgelöste Helligkeitsverteilung im Bereich vor dem Fahrzeug möglich.

Eine andere vorteilhafte Ausgestaltung besteht darin, dass der Mikrocontroller ferner ein Programm für eine Fahrer-Assistenz-Funktion enthält und ein Anschluss für eine Mensch-Maschine-Schnittstelle vorgesehen ist. Die Mensch-Maschine-Schnittstelle, beispielsweise ein LCD-Display und Bedienelemente, kann an einer ergonomisch vorteilhaften Stelle des Fahrzeugs angeordnet sein.

### Kurze Beschreibung der Zeichnungen

Ausführungsbeispiele der Erfindung sind in der Zeichnung anhand mehrerer Figuren dargestellt und in der nachfolgenden Beschreibung näher erläutert. Es zeigt:
Fig. 1 ein Blockschaltbild einer erfindungsgemäßen Einrichtung,
Fig. 2 eine schematische Darstellung der in ein Fahrzeug eingebauten erfindungsgemäßen Einrichtung und
Fig. 3 zwei Ansichten einer Leiterplatte mit der Videokamera und dem Lichtsensor.

### Ausführungsform der Erfindung

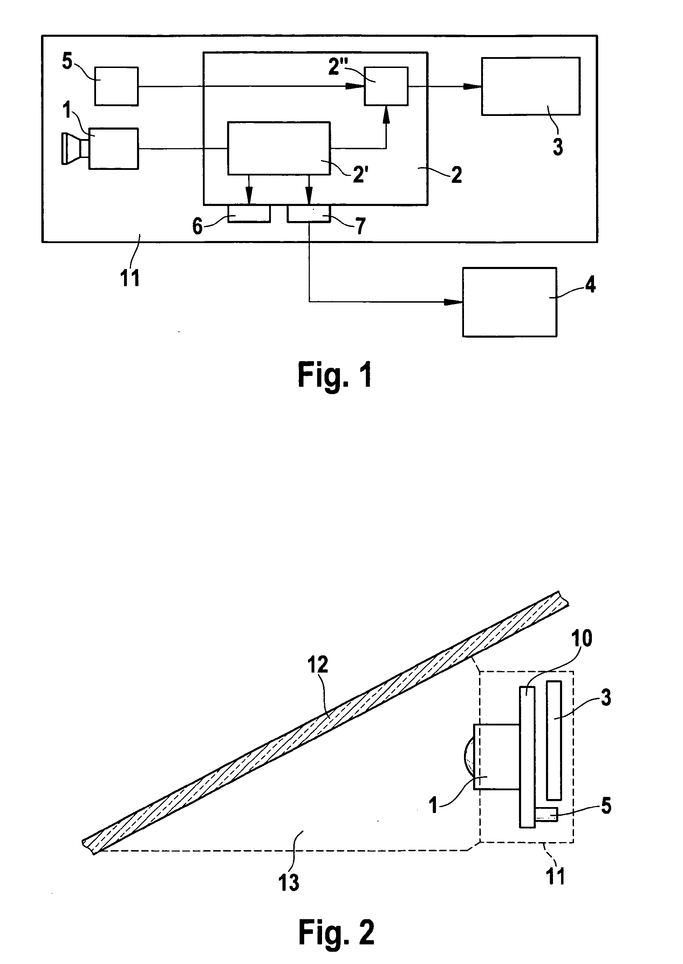

Fig. 1 zeigt eine Videokamera 1 - im Folgenden auch Videosensor genannt -, eine Auswerteeinheit 2, einen Rückspiegel 3 (vorzugsweise einen Innenspiegel) mit steuerbarer Reflektivität und eine Mensch-Maschine-Schnittstelle (HMI) 4. Rückspiegel mit steuerbarer Reflektivität sind an sich bekannt und beispielsweise in US 6,742,904 B2 beschrieben. Häufig wird zur Steuerung der Reflektivität eine elektrochromatische Schicht auf den Spiegel aufgebracht, die von einem steuerbaren Strom durchflossen wird, wobei die Reflektivität umso geringer ist, je größer der Strom ist.

An die Auswerteeinheit 2 ist ferner ein nach rückwärts gerichteter Lichtsensor 5 angeschlossen. Bis auf die Mensch-Maschine-Schnittstelle sind die genannten Elemente in ein Gehäuse 11 des Rückspiegels 3 eingebaut.

Die Auswerteeinheit 2 wird im Wesentlichen von einem Mikrocontroller gebildet, der durch entsprechende Programme ein videobasiertes Fahrer-Assistenz-System 2' darstellt. Außerdem bildet der Mikrocontroller eine Steuereinrichtung 2" für den Rückspiegels 3. Über Anschlüsse 6, 7 sind ein im Übrigen nicht dargestellter Fahrzeugbus und die Mensch-Maschine-Schnittstelle 4 anschließbar.

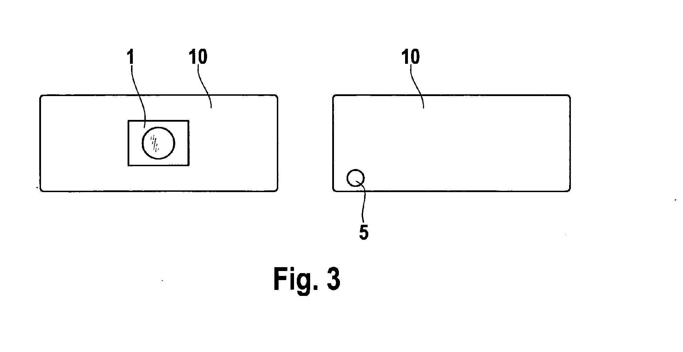

Fig. 2 zeigt schematisch eine Leiterplatte 10 mit dem Lichtsensor 5 und dem Videosensor 1, die zusammen mit dem Rückspiegel 3 im Spiegelgehäuse 11 angeordnet sind. Der Videosensor 1 nimmt ein Bild des Raumes vor dem Fahrzeug durch eine Windschutzscheibe 12 auf. Zur Vermeidung von Streulicht ist eine Streulichtblende 13 vorgesehen. Die ferner in Fig. 3 dargestellte Leiterplatte 10 trägt auf der einen Seite den Lichtsensor 3 und auf der anderen Seite mit Sicht in Fahrtrichtung den Videosensor 1.

## Patentansprüche

1. Einrichtung mit einer in Fahrtrichtung ausgerichteten in eine Rückspiegel-Baugruppe (3, 11) eines Fahrzeugs eingebauten Videokamera (1), **dadurch gekennzeichnet, dass** ferner in der Rückspiegel-Baugruppe (3, 11) ein nach rückwärts gerichteter Lichtsensor (5) vorgesehen ist und dass eine Einrichtung (2") zur Verringerung der Reflektivität des Rückspiegels (3) von den Signalen der Videokamera (1) und des Lichtsensors (5) steuerbar ist.

2. Einrichtung nach Anspruch 1, **dadurch gekennzeichnet, dass** die Videokamera (1) mit einer Bildverarbeitungseinrichtung (2') verbunden ist.

3. Einrichtung nach Anspruch 2, **dadurch gekennzeichnet, dass** die Bildverarbeitungseinrichtung (2') ebenfalls in der Rückspiegel-Baugruppe (3, 11) angeordnet ist.

4. Einrichtung nach einem der vorhergehenden Ansprüche, **dadurch gekennzeichnet, dass** die Videokamera (1), der Lichtsensor (5), die Bildverarbeitungseinrichtung (2') und/oder die Steuereinrichtung (2") auf einer Leiterplatte (10) angeordnet sind.

5. Einrichtung nach einem der vorhergehenden Ansprüche, **dadurch gekennzeichnet, dass** ein Mikrocontroller (2) die Ausgangssignale der Videokamera (1) und des Lichtsensors (5) auswertet und Steuersignale für die Steuerung der Reflektivität des Rückspiegels (3) erzeugt.

6. Einrichtung nach Anspruch 5, **dadurch gekennzeichnet, dass** der Mikrocontroller (2) ferner ein Programm für eine Fahrer-Assistenz-Funktion enthält und ein Anschluss (7) für eine Mensch-Maschine-Schnittstelle (4) vorgesehen ist.

## Claims

1. Device having a video camera (1) which is installed in a rear-view mirror assembly (3, 11), oriented in the direction of travel, in a vehicle, **characterized in that** in addition a backwards-directed light sensor (5) is provided in the rear-view mirror assembly (3, 11), and **in that** a device (2") for reducing the reflectivity of the rear-view mirror (3) can be controlled by the signals of the video camera (1) and of the light sensor (5).

2. Device according to Claim 1, **characterized in that** the video camera (1) is connected to an image-processing device (2').

3. Device according to Claim 2, **characterized in that** the image-processing device (2') is also arranged in the rear-view mirror assembly (3, 11).

4. Device according to one of the preceding claims, **characterized in that** the video camera (1), the light sensor (5), the image-processing device (2') and/or the control device (2") are arranged on a printed circuit board (10).

5. Device according to one of the preceding claims, **characterized in that** a microcontroller (2) evaluates the output signals of the video camera (1) and of the light sensor (5) and generates control signals for controlling the reflectivity of the rear-view mirror (3).

6. Device according to Claim 5, **characterized in that** the microcontroller (2) also contains a program for a driver assistance function, and a connection (7) for a man/machine interface (4) is provided.

## Revendications

1. Dispositif comprenant une caméra vidéo (1) dirigée dans un sens de déplacement et intégrée dans un sous-ensemble rétroviseur (3, 11) d'un véhicule, **caractérisé en ce qu'**un détecteur de lumière (5) dirigé vers l'arrière est en outre prévu dans le sous-ensemble rétroviseur (3, 11) et **en ce qu'**un dispositif (2") destiné à réduire la réflectivité du rétroviseur (3) peut être commandé par les signaux de la caméra vidéo (1) et du détecteur de lumière (5).

2. Dispositif selon la revendication 1, **caractérisé en ce que** la caméra vidéo (1) est reliée avec un dispositif de traitement d'image (2').

3. Dispositif selon la revendication 2, **caractérisé en ce que** le dispositif de traitement d'image (2') est lui aussi disposé dans le sous-ensemble rétroviseur (3, 11).

4. Dispositif selon l'une des revendications précédentes, **caractérisé en ce que** la caméra vidéo (1), le détecteur de lumière (5), le dispositif de traitement d'image (2') et/ou le dispositif de commande (2") sont disposés sur un circuit imprimé (10).

5. Dispositif selon l'une des revendications précédentes, **caractérisé en ce qu'**un microcontrôleur (2) interprète les signaux de sortie de la caméra vidéo (1) et du détecteur de lumière (5) et génère des signaux de commande pour commander la réflectivité du rétroviseur (3).

6. Dispositif selon la revendication 5, **caractérisé en ce que** le microcontrôleur (2) contient en outre un programme pour une fonction d'assistance au conducteur et il est prévu un raccordement (7) pour une interface homme-machine (4).
